# EUROPÄISCHE PATENTSCHRIFT

(11) **EP 4 042 095 B1**
(45) Veröffentlichungstag und Bekanntmachung des Hinweises auf die Patenterteilung: **17.09.2025**
(21) Anmeldenummer: 20788718.3
(22) Anmeldetag: 24.09.2020
(51) Int. Cl.: F41H 1/02, A41D 1/00

(54) **WESTENADAPTER FÜR EINE SCHUTZWESTE ZUM VERBINDEN EINER MEHRZAHL VON MODULEN, SYSTEM MIT WESTENADAPTER UND VERBUNDENEN MODULEN, ANORDNUNG MIT SCHUTZWESTE UND WESTENADAPTER**
VEST ADAPTER FOR A PROTECTIVE VEST FOR CONNECTING A PLURALITY OF MODULES, SYSTEM HAVING A VEST ADAPTER AND CONNECTED MODULES, ASSEMBLY HAVING A PROTECTIVE VEST AND VEST ADAPTER
ADAPTATEUR DE GILET POUR GILET DE PROTECTION DESTINÉ À RACCORDER UNE PLURALITÉ DE MODULES, SYSTÈME COMPRENANT UN ADAPTATEUR DE GILET ET DES MODULES RACCORDÉS, ENSEMBLE DOTÉ D'UN GILET DE PROTECTION ET D'UN ADAPTATEUR DE GILET

(30) Priorität: 09.10.2019 DE 102019127146
(43) Veröffentlichungstag der Anmeldung: 17.08.2022
(73) Patentinhaber: Rheinmetall Electronics GmbH, 28309 Bremen (DE)
(72) Erfinder: NÖTZEL, Christian, 28816 Stuhr (DE); MIEKLEY, Sebastian, 28325 Bremen (DE); WEISS, Fabian, 28357 Bremen (DE)
(74) Vertreter: HKW Intellectual Property PartG mbB
(86) Internationale Anmeldenummer: PCT/EP2020/076748
(87) Internationale Veröffentlichungsnummer: WO 2021/069230

(56) Entgegenhaltungen:
- EP-A2- 1 249 751
- KR-A- 20130 079 838
- US-A1- 2014 101 831
- US-A1- 2018 249 133

## Beschreibung

Die vorliegende Erfindung betrifft einen durch eine Einsatzkraft tragbaren Westenadapter mit einer Infrastruktur zum Verbinden einer Mehrzahl von Modulen. Des Weiteren betrifft die vorliegende Erfindung ein System mit einem Westenadapter und einer Anzahl von mit der Infrastruktur des Westenadapters verbundenen Modulen. Außerdem betrifft die vorliegende Erfindung eine durch eine Einsatzkraft tragbare Anordnung mit einer Schutzweste für die Einsatzkraft und einem Westenadapter oder einem System mit Westenadapter und verbundenen Modulen.

Es sind herkömmliche Schutzwesten für Einsatzkräfte, beispielsweise Soldaten, bekannt, welche eine integrierte, das heißt fest verbundene Infrastruktur zum Koppeln einer Mehrzahl von Modulen, beispielsweise Kommunikationsmodulen und Energiemodulen, aufweisen.

Die US 2018/249133 A1 offenbart ein persönliches taktisches System, das ein ballistisch tragbares Kleidungsstück, einen Beutel mit einer oder mehreren darin enthaltenen Batterien, einen elektronischen Prozessor, ein Kommunikationsgerät und zumindest eine Kamera aufweist. Die Kamera ist in das tragbare Kleidungsstück eingebaut oder lösbar daran befestigbar, der Beutel ist lösbar an dem tragbaren Kleidungsstück befestigbar und die eine oder mehreren Batterien sind betreibbar, so dass die Kamera und das Kommunikationsgerät mit Energie versorgt werden. Der Prozessor führt eine Bilderkennungssoftware aus, die betreibbar ist, um sich nähernde Objekte zu identifizieren und den Benutzer zu warnen. Mehrere persönliche taktische Systeme sind betreibbar, um ein Ad-hoc-Netzwerk zu bilden, um Bilder und andere Informationen zum Bestimmen von Objektrichtung, -ort und -bewegung auszutauschen.

Ferner offenbart die US 2014/101831 A1 eine Westenanordnung zum Verwenden durch einen Anwender. Die Westenanordnung weist einen Westenkörper, mehrere im Westenkörper angeordnete Kommunikationskomponenten, eine im Westenkörper angeordnete oder anderweitig mit dem Westenkörper verbundene Antenne, eine wiederaufladbare Energieversorgung und eine thermoelektrische Wandleranordnung zum Umwandeln von Körperwärmeenergie in elektrische Energie, um die Energieversorgung aufzuladen und/oder die Kommunikationskomponenten mit Energie zu versorgen, auf. Die Antenne steht in elektrischer Verbindung mit zumindest einer der Kommunikationskomponenten.

Vor diesem Hintergrund besteht eine Aufgabe der vorliegenden Erfindung darin, die Kopplung einer Mehrzahl von Modulen an einer durch eine Schutzweste geschützten Einsatzkraft zu verbessern. Diese Aufgabe wird mit dem Westenadapter nach Anspruch 1 gelöst.

Gemäß einem ersten Aspekt wird ein durch eine Einsatzkraft tragbarer Westenadapter zum Verbinden einer Mehrzahl von Modulen vorgeschlagen. Der Westenadapter ist mit einer Schutzweste der Einsatzkraft lösbar koppelbar. Der Westenadapter weist zumindest einen ersten Teilbereich zum Tragen im Bereich der Brust der Einsatzkraft und einen zweiten Teilbereich zum Tragen im Bereich des Rückens der Einsatzkraft auf. Insbesondere weist der Westenadapter einen dritten Teilbereich zum Tragen im Bereich der Schultern der Einsatzkraft auf. Dabei ist der Westenadapter durch eine erste Materiallage, eine zweite Materiallage und eine zwischen der ersten und der zweiten Materiallage angeordnete Infrastruktur zum Koppeln der Module ausgebildet, wobei die Infrastruktur eine Mehrzahl N1 von über Kabel verbundene Einheiten eines drahtgebundenen Schnittstellentyps und eine Mehrzahl N2 von über Kabel verbundene Einheiten eines ersten drahtlosen Schnittstellentyps aufweist.

Die Kabel sind insbesondere Flachbandkabel. Die Einsatzkraft ist beispielsweise ein Soldat. Weitere Beispiele für Einsatzkräfte sind Feuerwehrleute, Polizisten, THW-Mitarbeiter und dergleichen.

Beispiele für die zu verbindenden Module umfassen ein Kommunikations-Modul, ein Interface-Modul, ein USB-Modul, ein Stecker-Modul zum Stecken von externe Geräte und/oder Sensoren, ein Energie-Modul, beispielsweise umfassend einen Akkumulator, einen Effektor, ein Anzeigegerät, ein Bediengerät, einen GPS-Empfänger, ein elektronisches System, wie ein Fahrzeugsystem, und/oder Sensoren.

Beispiele für die Sensoren umfassen ein Gyroskop, einen Beschleunigungssensor, einen Schrittzähler, einen Höhenmesser, einen Lichtsensor, ein Mikrophon, eine Umgebungsgeräuschunterdrückung und/oder einen Kompass.

Bei einem drahtgebundenen Schnittstellentyp, z. B. USB (Universal Serial Bus), erfolgen die Datenübertragung und die Energieübertragung ausschließlich drahtgebunden, d. h. ausschließlich drahtgebundene Datenübertragung und Energieübertragung intern der Infrastruktur und ausschließlich drahtgebundene Datenübertragung und Energieübertragung extern der Infrastruktur, d. h. insbesondere von und zu den Modulen.

Bei einem drahtlosen Schnittstellentyp, z. B. Bluetooth, erfolgt die Datenübertragung und/oder die Energieübertragung zumindest auf einer Teilstrecke drahtlos. Insbesondere erfolgt die Datenübertragung bei dem drahtlosen Schnittstellentyp extern der Infrastruktur ausschließlich drahtlos und intern der Infrastruktur ausschließlich drahtgebunden.

Aus Sicherheitsgründen, insbesondere gegen Störung und Abhören erfolgt die Datenübertragung intern der Infrastruktur somit ausschließlich drahtgebunden. Hierdurch erhöht sich die Sicherheit.

Der Westenadapter mit der Infrastruktur zum Verbinden der Module ist an der Schutzweste der Einsatzkraft lösbar koppelbar, das heißt lösbar befestigbar. Mit anderen Worten kann der Westenadapter an der Schutzweste, insbesondere oberhalb, innerhalb oder unterhalb der Schutzweste, befestigt werden und diese Befestigung kann wieder gelöst werden. Beispiele für Befestigungsvorrichtungen zum Befestigen des Westenadapters an der Schutzweste umfassen Clipse, Klemmverbindungen, Steckverbindungen, Reißverschlüsse und/oder Klettverschlussverbindungen.

Der vorgeschlagene Westenadapter kann mit unterschiedlichen Westen gleichen Typs oder unterschiedlichen Typs gekoppelt werden. Hieraus ergibt sich ein erheblicher Vorteil gegenüber Schutzwesten mit integrierter Infrastruktur zum Verbinden von Modulen. Reißt beispielsweise ein Kabel der Infrastruktur im Feld, zum Beispiel während eines Kampfes, so kann der betroffene Soldat vorliegend einfach den Westenadapter gegen ein Ersatzstück tauschen, er kann seine Schutzweste vorteilhafterweise anbehalten.

Bei einer herkömmlichen Schutzweste mit integrierter Infrastruktur müsste der Soldat bei Riss eines Kabels die gesamte Schutzweste tauschen. Folglich ergibt sich durch die flexible Einsetzbarkeit des vorliegenden Westenadapters auch eine Erhöhung der Sicherheit der Soldaten. Des Weiteren werden vorteilhafterweise Kosten eingespart, da für den jeweiligen Soldaten nicht jeweils eine Ersatz-Sicherheitsweste mit integrierter Infrastruktur bereitgehalten werden muss.

Ein weiterer Vorteil ergibt sich daraus, dass die Einsatzkraft ihre akzeptierte Schutzweste, oft individualisierte Schutzweste, weitertragen kann.

Die beiden Materiallagen und die dazwischen angeordnete Infrastruktur sind insbesondere in Art einer Sandwichbauweise aufgebaut.

Die Infrastruktur kann auch als Verbindungs-Einrichtung oder KoppelEinrichtung bezeichnet werden.

Gemäß einer Ausführungsform weist die Infrastruktur eine Mehrzahl N3 von über Kabel verbundene Einheiten eines zweiten drahtlosen Schnittstellentyps und eine Mehrzahl N4 von über Kabel verbundenen Einheiten eines dritten drahtlosen Schnittstellentyps auf. N1, N2, N3 und N4 sind insbesondere natürliche Zahlen.

Beispielsweise ist der drahtgebundene Schnittstellentyp USB (Universal Serial Bus), der erste drahtlose Schnittstellentyp ist WiFi (Wireless Fidelity), der zweite drahtlose Schnittstellentyp ist Bluetooth und der dritte drahtlose Schnittstellentyp ist NFC (Near Field Communication).

Gemäß einer weiteren Ausführungsform ist die jeweilige Einheit des drahtgebundenen Schnittstellentyps als elektrische und mechanische Verbindungs-Einheit, insbesondere als Verbindungsstecker oder Verbindungsbuchse, ausgebildet.

Gemäß einer weiteren Ausführungsform ist die jeweilige Einheit der drahtlosen Schnittstellentypen als eine Antenne oder als eine elektrische und mechanische Verbindungs-Einheit, insbesondere als ein Verbindungsstecker oder Verbindungsbuchse, ausgebildet.

Gemäß einer weiteren Ausführungsform sind jeweils zwei Einheiten vom gleichen Schnittstellentyp mittels einer durch eines der Kabel gebildeten Punkt-zu-Punkt-Verbindung verbunden. Dabei ist jeweils eine der beiden Einheiten, welche als Verbindungs-Einheit ausgebildet ist, in einer Verbindungsanordnung der Infrastruktur angeordnet ist.

Wenn beispielsweise die Infrastruktur des Westenadapters vier USB-Anschlüsse zum Anschließen eines jeweiligen Moduls mittels USB, zwei NFC-Antennen für eine jeweilige NFC-Kommunikation, eine WiFi-Antenne für eine WiFi-Kommunikation und eine Bluetooth-Antenne für eine Bluetooth-Kommunikation hat, dann weist die Infrastruktur beispielsweise insgesamt acht Punkt-zu-Punkt-Verbindungen per Kabel und sieben Verbindungs-Einheiten (4 x USB, 1 x WiFi, 1 x Bluetooth, 1 x NFC) innerhalb der Verbindungsanordnung der Infrastruktur auf.

Beispielsweise umfasst der erste Teilbereich zum Tragen im Bereich der Brust der Einsatzkraft zwei USB-Anschlüsse und eine NFC-Antenne. Im zweiten Teilbereich zum Tragen im Bereich des Rückens der Einsatzkraft sind beispielsweise die Verbindungsanordnung, zwei USB-Anschlüsse, eine WiFi-Antenne, eine Bluetooth-Antenne und eine NFC-Antenne vorgesehen. Der zweite Teilbereich zum Tragen im Bereich des Rückens kann bis in den Bereich des Steißbeins der Einsatzkraft gezogen sein, wobei dann beispielsweise zwei der oben erwähnten Anschlüsse, z.B. USB und NFC, in diesem Bereich des Steißbeins angeordnet sind. Die unterschiedlichsten Personen haben im Bereich des Steißbeins eine relativ kleine Varianz, so dass die dort angeordnete NFC-Antenne für verschiedene Personen zur Kommunikation mit einer fest installierten Empfangs-Einheit, z.B. eines Fahrzeugs oder eines Sitzes oder eines Stuhls verwendet werden kann.

Gemäß einer weiteren Ausführungsform ist die Verbindungsanordnung der Infrastruktur mit einer korrespondierenden Verbindungsanordnung eines Interface-Moduls verbindbar. Dabei umfasst das Interface-Modul eine jeweilige Steuer-Einheit für einen jeden der Schnittstellentypen der Infrastruktur und zumindest eine Verbindungs-Einheit, insbesondere einen Verbindungsstecker und/oder eine Antenne.

Die Steuer-Einheit kann hardwaretechnisch und/oder auch softwaretechnisch implementiert sein. Bei einer hardwaretechnischen Implementierung kann die Steuer-Einheit als Vorrichtung oder als Teil einer Vorrichtung, zum Beispiel als Computer oder als Mikroprozessor, ausgebildet sein. Bei einer softwaretechnischen Implementierung kann die Steuer-Einheit als Computerprogrammprodukt, als eine Funktion, als eine Routine, als Teil eines Programmcodes oder als ausführbares Objekt ausgebildet sein.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikations-Netzwerk durch die Übertragung einer entsprechenden Datei mit dem Computerprogrammprodukt oder dem Computerprogramm-Mittel erfolgen.

Gemäß einer weiteren Ausführungsform ist der drahtgebundene Schnittstellentyp als USB ausgebildet. Dessen Einheiten der Infrastruktur sind als USB-Verbindungs-Einheiten ausgebildet. Dabei ist zumindest eine der USB-Verbindungs-Einheiten mit einem USB-Modul verbindbar. Das USB-Modul umfasst einen USB-Hub aufweisend einen USB-Controller und eine Mehrzahl von USB-Verbindungs-Einheiten zur Ausbildung eines kaskadierten Stern-Netzwerks mit den USB-Verbindungs-Einheiten der Infrastruktur des Westenadapters.

Die USB-Verbindungs-Einheit kann auch als USB-Port oder USB-Anschluss bezeichnet werden und ist als USB-Stecker oder USB-Buchse ausgebildet.

Durch den Einsatz des USB-Moduls und die Ausbildung des kaskadierten Stern-Netzwerks ist die Anzahl der USB-Anschlüsse für den Westenadapter skalierbar. Folglich kann je nach Applikation durch den Westenadapter eine einstellbare Anzahl an USB-Anschlüssen bereitgestellt werden, z.B. 4, 8 oder 12.

Gemäß einer weiteren Ausführungsform ist die jeweilige Materiallage aus einem Gewebe, insbesondere einem Textil, aus einem Kunststoffmaterial, einem Faserverbundwerkstoff oder einem Metallwerkstoff gebildet. Für eine Anzahl der Verbindungs-Einheiten weist die Materiallage eine jeweilige Durchführung zum Anschluss eines der Module auf.

Die Durchführung ist insbesondere dazu geeignet, den jeweiligen Anschluss, zum Beispiel einen USB-Anschluss, von der Infrastruktur nach außen zu führen, wo ein korrespondierender USB-Stecker eines externen Moduls eingesteckt werden kann.

Gemäß einer weiteren Ausführungsform weist die Materiallage im Bereich der jeweiligen Durchführung eine Aufnahme-Einrichtung zum Aufnehmen des anschließbaren Moduls auf. Die Aufnahme-Einrichtung ist insbesondere als eine Tasche ausgebildet.

In die Aufnahme-Einrichtung kann das entsprechende Modul eingesteckt werden und durch die Durchführung können zum Beispiel die USB-Buchse der Infrastruktur mit dem USB-Stecker des Moduls kontaktiert werden.

Gemäß einer weiteren Ausführungsform ist die Infrastruktur des Westenadapters dazu eingerichtet, eine in einem Kleidungsstück der Einsatzkraft getragene kontaktlose Smartcard mit einem elektronischen System zur Übertragung von kryptografischen Material und/oder von mittels des kryptografischen Materials bereitgestellten Daten kommunikationstechnisch zu koppeln.

Beispielsweise ist das Kleidungsstück eine an einer Kette getragene Erkennungsmarke eines Soldaten (Dog-Tag-Kette), welche die kontaktlose Smart-Card aufweist, insbesondere integriert. Das elektronische System ist insbesondere ein Fahrzeugsystem, beispielsweise ein Rad-Panzer. Dabei kann das folgende Beispiel die Funktionsweise des vorliegenden Westenadapters illustrieren: Wenn der Soldat mit seiner Erkennungsmarke am Hals und getragener Schutzweste mit befestigtem Westenadapter in das Fahrzeug steigt, so kann er sich mittels der Daten, welche auf der Smart-Card gespeichert sind, gegenüber dem Fahrzeugsystem identifizieren und/oder authentifizieren. Hierbei kann beispielsweise oben diskutierte NFC-Schnittstelle verwendet werden. Wenn die eine der beiden NFC-Antennen in dem ersten Teilbereich zum Tragen im Bereich der Brust und die zweite NFC-Antenne im zweiten Teilbereich zum Tragen im Bereich des Steißbeins angeordnet sind, so kann die erste NFC-Antenne die Daten der Smart-Card erfassen, über die Verbindungs-Einheit für NFC in der Verbindungsanordnung an die zweite NFC-Antenne im Bereich des Steißbeins übertragen und von dort kann die zweite NFC-Antenne diese Daten an eine Empfangs-Einheit des Fahrzeugsystems übertragen, welche in dem Fahrzeugsitz angeordnet ist. Eine solche Kommunikation kann insbesondere auch bidirektional erfolgen.

Gemäß einem zweiten Aspekt wird ein System vorgeschlagen, welches einen Westenadapter gemäß dem ersten Aspekt oder einer der Ausführungsformen des ersten Aspekts und eine Anzahl von mit der Infrastruktur des Westenadapters verbundenen Modulen aufweist.

Gemäß einer Weiterbildung umfasst die Anzahl von verbundenen Modulen ein Interface-Modul, welches eine jeweilige Steuer-Einheit und zumindest eine Verbindungs-Einheit, insbesondere einen Verbindungsstecker, und/oder eine Antenne für einen jeden der Schnittstellentypen der Infrastruktur des Westenadapters aufweist.

Gemäß einer weiteren Weiterbildung ist der drahtgebundene Schnittstellentyp als USB ausgebildet und dessen Einheiten der Infrastruktur des Westenadapters sind als USB-Verbindungs-Einheiten ausgebildet. Dabei weist die Anzahl von verbundenen Modulen ein USB-Modul auf, welches einen USB-Hub aufweisend einen USB-Controller und eine Mehrzahl von USB-Verbindungs-Einheiten zur Ausbildung eines kaskadierten Stern-Netzwerks mit den USB-Verbindungs-Einheiten der Infrastruktur des Westenadapters umfasst.

Gemäß einem dritten Aspekt wird eine durch eine Einsatzkraft tragbare Anordnung vorgeschlagen, mit einer Schutzweste für die Einsatzkraft und einem Westenadapter gemäß dem ersten Aspekt oder einer der Ausführungsformen des ersten Aspekts, wobei der Westenadapter und die Schutzweste lösbar koppelbar sind, oder einem System gemäß dem zweiten Aspekt oder einer der Weiterbildungen des zweiten Aspekts, wobei das System und die Schutzweste lösbar koppelbar sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Im Weiteren wird die Erfindung anhand von bevorzugten Ausführungsbeispielen unter Bezugnahme auf die beigelegten Figuren näher erläutert.
- Fig. 1: zeigt ein schematisches Blockschaltbild eines Ausführungsbeispiels eines Systems mit einem tragbaren Westenadapter für eine Einsatzkraft;
- Fig. 2: zeigt eine Schnittansicht des Westenadapters nach Fig. 1; und
- Fig. 3: zeigt ein schematisches Blockschaltbild eines Ausführungsbeispiels eines Interface-Moduls für den Westenadapter nach Fig. 1;
- Fig. 4: zeigt ein schematisches Blockschaltbild eines Ausführungsbeispiels eines USB-Moduls für den Westenadapter nach Fig. 1;
- Fig. 5: zeigt ein schematisches Blockschaltbild eines Ausführungsbeispiels eines Kommunikations-Moduls für den Westenadapter nach Fig. 1;
- Fig. 6: zeigt ein schematisches Blockschaltbild eines Ausführungsbeispiels eines Stecker-Moduls für den Westenadapter nach Fig. 1; und
- Fig. 7: zeigt ein schematisches Blockschaltbild eines weiteren Ausführungsbeispiels eines Systems mit einem tragbaren Westenadapter für eine Einsatzkraft.

In den Figuren sind gleiche oder funktionsgleiche Elemente mit denselben Bezugszeichen versehen worden, sofern nichts anderes angegeben ist.

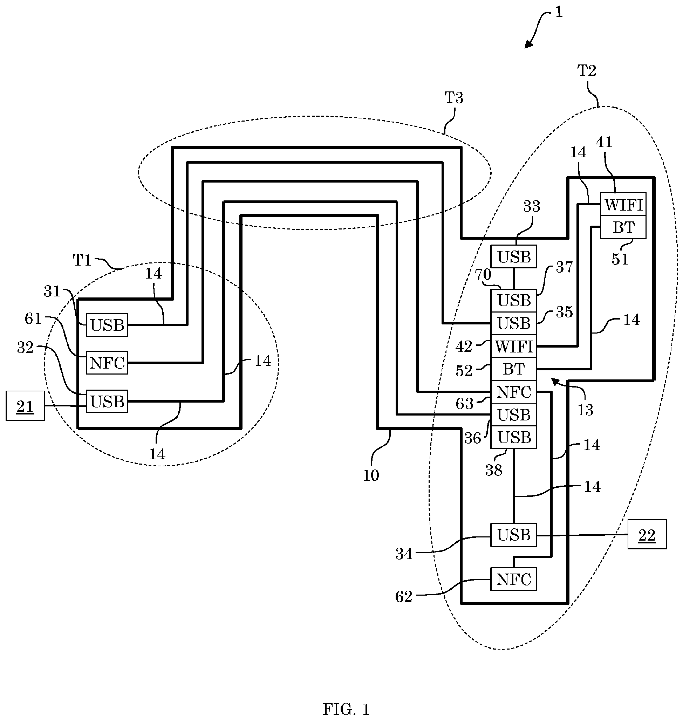

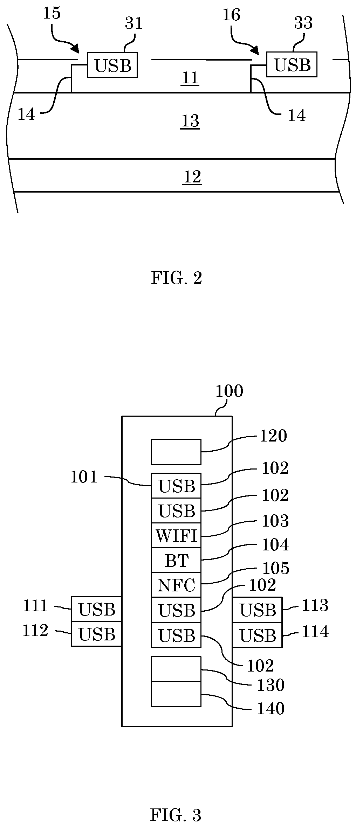

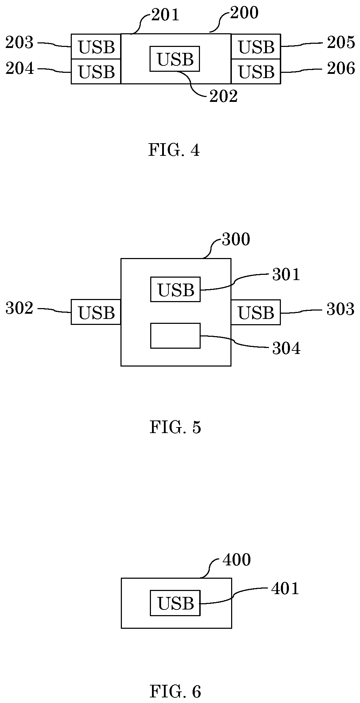

Fig. 1 zeigt ein schematisches Blockschaubild eines Ausführungsbeispiels eines Systems 1 mit einem tragbaren Westenadapter 10 für eine Einsatzkraft. Die Fig. 1 wird unter gemeinsamer Bezugnahme auf die Fig. 2 bis 6 erläutert. Hierbei zeigt die Fig. 2 eine Schnittansicht des Westenadapters 10 nach Fig. 1, Fig. 3 zeigt ein Interface-Modul 100 für den Westenadapter 10 nach Fig. 1, Fig. 4 zeigt ein USB-Modul 200 für den Westenadapter 10 nach Fig. 1, Fig. 5 zeigt ein Kommunikations-Modul 300 für den Westenadapter 10 nach Fig. 1 und Fig. 6 zeigt ein Stecker-Modul 400 für den Westenadapter 10 nach Fig. 1.

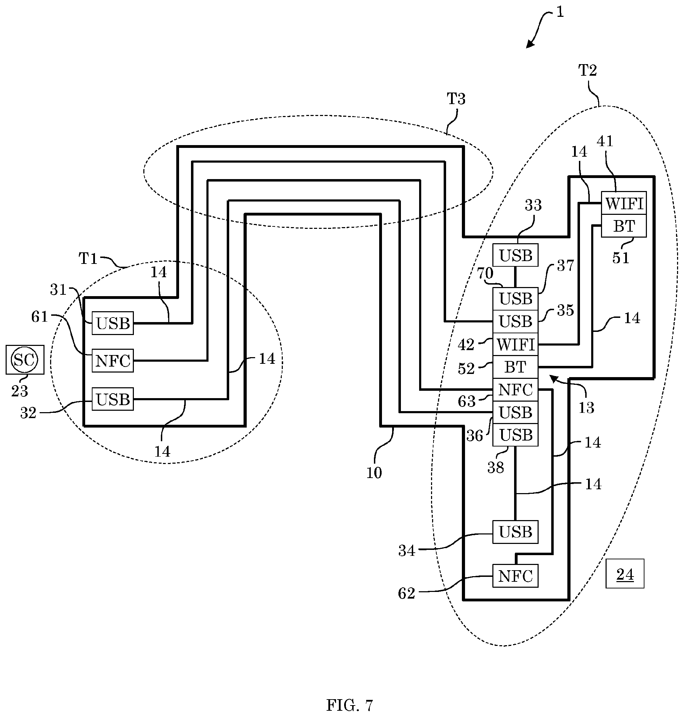

Der Westenadapter 10 nach Fig. 1 ist mit einer Mehrzahl von Modulen 21-24, 100-400 koppelbar. Die Module 21, 22 sind in Fig. 1 gezeigt, das Interface-Modul 100 ist in Fig. 3 gezeigt, das USB-Modul 200 ist in Fig. 4 gezeigt, das Kommunikations-Modul 300 ist in Fig. 5 gezeigt und das Stecker-Modul 400 ist in Fig. 6 gezeigt. Darüber hinaus zeigt die Fig. 7, welche im Folgenden noch detailliert erläutert werden wird, die Module 23 und 24. Beispielsweise sind die Module 21 und 22 der Fig. 1 las das USB-Modul 200 der Fig. 4 und als das Kommunikations-Modul 300 der Fig. 5 ausgebildet.

Der Westenadapter 10 ist mit einer Schutzweste (nicht gezeigt) der Einsatzkraft lösbar koppelbar. Das heißt, der Westenadapter 10 ist an der Schutzweste lösbar befestigbar.

Der Westenadapter 10 nach Fig. 1 hat einen ersten Teilbereich T1 zum Tragen im Bereich der Brust der Einsatzkraft, einen zweiten Teilbereich T2 zum Tragen im Bereich des Rückens der Einsatzkraft und einen dritten Teilbereich T3 zum Tragen im Bereich der Schultern der Einsatzkraft. Der Westenadapter 10 kann in oder auf der Schutzweste getragen werden.

Wie in Fig. 2 dargestellt, hat der Westenadapter 10 eine erste Materiallage 11, eine zweite Materiallage 12 und eine zwischen der ersten Materiallage 11 und der zweiten Materiallage 12 angeordnete Infrastruktur 13 zum Koppeln der Module 21, 22 (nach Fig. 1).

In dem Beispiel der Fig. 1 hat die Infrastruktur 13 des Westenadapters 10 vier USB-Anschlüsse 31-34 zum Anschließen eines jeweiligen Moduls mittels USB, zwei NFC-Antennen 61-62 für eine jeweilige NFC-Kommunikation, eine WiFi-Antenne 41 für eine WiFi-Kommunikation und eine Bluetooth-Antenne 51 (BT, Bluetooth) für eine Bluetooth-Kommunikation. Hierzu hat die Infrastruktur 10 der Fig. 1 acht Punkt-zu-Punkt Verbindungen per Kabel 14 und sieben Verbindungs-Einheiten (4 x USB mit den Bezugszeichen 35-38, 1 x WiFi mit dem Bezugszeichen 42, 1 x Bluetooth mit dem Bezugszeichen 52, 1 x NFC mit dem Bezugszeichen 63) innerhalb der Verbindungsanordnung 70 der Infrastruktur 13.

Beispielsweise umfasst der erste Teilbereich T1 zum Tragen im Bereich der Brust der Einsatzkraft zwei USB-Anschlüsse 31, 32 und eine NFC-Antenne 61.

Im zweiten Teilbereich T2 zum Tragen im Bereich des Rückens der Einsatzkraft sind beispielsweise die Verbindungsanordnung 70, zwei USB-Anschlüsse 33, 34 eine WiFi-Antenne 41, eine Bluetooth-Antenne 51 und eine NFC-Antenne 62 vorgesehen.

Der zweite Teilbereich T2 zum Tragen im Bereich des Rückens kann bis in den Bereich des Steißbeins der Einsatzkraft gezogen sein, wobei dann beispielsweise der USB-Anschluss 34 und die NFC-Antenne 62 in diesem Bereich des Steißbeins angeordnet sind. Hierbei ist herauszustellen, dass die unterschiedlichsten Personen im Bereich des Steißbeins eine relativ kleine Varianz haben, so dass die dort angeordnete NFC-Antenne 62 für verschiedene Personen zur Kommunikation mit einer fest installierten Empfangs-Einheit 24 (siehe Fig. 7) eines Fahrzeugs-Systems verwendet werden kann. Details hierzu werden mit Bezug zur Fig. 7 beschrieben.

Weiter mit Bezug zur Fig. 1, ist die Verbindungsanordnung 70 der Infrastruktur 13 mit einer korrespondierenden Verbindungsanordnung 101 des Interface-Moduls 100 verbindbar (siehe Fig. 3). Das Interface-Modul 100 hat eine jeweilige Steuer-Einheit 102-105 für einen jede der Schnittstellen innerhalb der Verbindungsanordnung 70 und eine Anzahl von Verbindungs-Einheiten, hier die USB-Ports 111-113.

Darüber hinaus umfasst das Interface-Modul 100 der Fig. 3 eine Audio-Einheit 120, eine Steuer-Einheit 130 und eine Energie-Einheit 140. Die Audio-Einheit 120 kann beispielsweise ein Mikrofon und/oder einen Lautsprecher umfassen. Die Steuer-Einheit 130 umfasst beispielsweise einen Mikroprozessor. Die Energie-Einheit 140 hat insbesondere eine Anzahl von Akkumulatoren.

Wie die Fig. 1 zeigt, umfasst die Infrastruktur 13 eine Anzahl von USB-Ports 31-34. An einen solchen USB-Port 31-34 kann das USB-Modul 200 der Fig. 4 verbunden werden. Das USB-Modul 200 der Fig. 4 hat einen USB-Hub 201 aufweisend einen USB-Controller 202 und eine Anzahl von USB-Ports 203-206. Ohne Einschränkung der Allgemeinheit hat das USB-Modul 200 der Fig. 4 vier USB-Ports 203-206. Auch eine größere oder kleinere Anzahl von USB-Ports ist möglich.

Das USB-Modul 200 mit USB-Controller 202 und USB-Ports 203-206 ist damit dazu eingerichtet, mit den USB-Verbindungs-Einheiten 31-38 der Infrastruktur 13 des Westenadapters 10 ein kaskadiertes Stern-Netzwerk auszubilden.

Des Weiteren ist an einen der USB-Ports 31-34 der Infrastruktur 13 das Kommunikations-Modul 300 der Fig. 5 verbindbar. Das Kommunikations-Modul 300 der Fig. 5 hat einen USB-Controller 301 sowie zwei USB-Ports 302, 303. Ferner umfasst das Kommunikations-Modul 300 eine Rechen-Einheit 304. Das Kommunikations-Modul 300 ist insbesondere mit einem Führungssystem zur Führung der Soldaten verbindbar und leistet eine Vielzahl von Funktionen, beispielsweise als Informationssystem und AR-Visualisierung (AR, Augmented Reality).

Des Weiteren ist an einen der USB-Ports 31-34 der Infrastruktur 13 das Stecker-Modul 400 der Fig. 6 verbindbar. Das Stecker-Modul 400 hat eine Anzahl von USB-Ports 401. Das Stecker-Modul 400 wird dabei insbesondere als Docking-Port zum Stecken von Benutzerendgeräten verwendet. Der mechanische Anteil des Stecker-Moduls 400 ist modular austauschbar und kann auch zum Stecken von Kabeln genutzt werden.

Wie die Fig. 2 zeigt, ist die Infrastruktur 13 zwischen der ersten Materiallage 11 und der zweiten Materiallage 12 angeordnet. Die erste Materiallage 11, die zweite Materiallage 12 und die Infrastruktur 13 sind insbesondere in Art einer Sandwich-Bauweise aufgebaut. Die jeweilige Materiallage 11, 12 ist beispielsweise aus einem Gewebe, wie einem Textil, aus einem Kunststoffmaterial, einem Faserverbundwerkstoff oder einem Metallwerkstoff gebildet. Für eine Anzahl der Verbindungs-Einheiten, in dem Beispiel der Fig. 2 die USB-Ports 31, 33, ist eine jeweilige Durchführung 15, 16 zum Anschluss eines der Module in einer der Materiallagen, in dem Beispiel der Fig. 2 in der ersten Materiallage 11, vorgesehen.

Die Materiallage 11 kann im Bereich der jeweiligen Durchführung 15, 16 eine Aufnahme-Einrichtung zum Aufnehmen des anschließbaren Moduls aufweisen. Eine solche Aufnahme-Einrichtung (nicht gezeigt) ist beispielsweise als Tasche ausgebildet.

Ferner zeigt die Fig. 7 ein schematisches Blockschaltbild eines weiteren Ausführungsbeispiels eines Systems 1 mit einem tragbaren Westenadapter 10 für eine Einsatzkraft. Der Westenadapter 10 entspricht dem mit Bezug zu den Fig. 1 bis 6 erläuterten Westenadapter 10. Die Fig. 7 unterscheidet sich von der Fig. 1 in den gekoppelten Modulen 23 und 24, anstatt der Module 21 und 22 in Fig. 1. In dem Beispiel der Fig. 7 ist das Modul 23 eine Erkennungsmarke eines Soldaten (Dog-Tag-Kette), welche eine kontaktlose Smart-Card SC aufweist. Das Modul 24 ist eine Empfangs-Einheit eines Fahrzeugsystems, beispielsweise eines Radpanzers.

Wenn der Soldat mit seiner Erkennungsmarke 23 am Hals und getragener Schutzweste mit befestigtem Westenadapter 10 in das Fahrzeug einsteigt, so kann er sich mittels der Daten, welche auf der Smart-Card SC gespeichert sind, gegenüber dem Fahrzeug identifizieren und/oder authentifizieren. Hierbei empfängt die NFC-Antenne 61 des ersten Teilbereichs T1 die Daten von der Smart-Card SC und überträgt diese mittels der NFC-Einheit 63 der Verbindungsanordnung 70 an die im Bereich des Steißbeins angeordnete NFC-Antenne 62.

Die NFC-Antenne 62 kann dann die Daten an die Empfangs-Einheit 24 des Fahrzeugsystems übertragen, um die Identifizierung und/oder Authentifizierung des Soldaten durchzuführen. Eine solche Kommunikation kann auch bidirektional erfolgen. Die Empfangs-Einheit 24 ist beispielsweise in einem Fahrzeugsitz des Fahrzeugs verbaut.

### BEZUGSZEICHENLISTE

- 1: System
- 10: Westenadapter
- 11: Materiallage
- 12: Materiallage
- 13: Infrastruktur
- 14: Kabel
- 15: Durchführung
- 16: Durchführung
- 21-24: Modul
- 31-38: Einheiten des drahtgebundenen Schnittstellentyps (USB)
- 41-42: Einheiten des ersten drahtlosen Schnittstellentyps (WiFi)
- 51-52: Einheiten des zweiten drahtlosen Schnittstellentyps (BT)
- 61-63: Einheiten des dritten drahtlosen Schnittstellentyps (NFC)
- 70: Verbindungsanordnung
- 100: Interface-Modul
- 101: Verbindungsanordnung
- 102-105: Steuer-Einheit
- 111-114: Verbindungs-Einheit
- 120: Audio-Einheit
- 130: Rechen-Einheit
- 140: Energie-Einheit
- 200: USB-Modul
- 201: USB-Hub
- 202: USB-Controller
- 203-206: USB-Port
- 300: Kommunikations-Modul
- 301: Steuer-Einheit
- 302-303: USB-Port
- 304: Rechen-Einheit
- 400: Stecker-Modul
- 401: USB-Port

- USB: Universal Serial Bus, drahtgebundener Schnittstellentyp
- WiFi: Wireless Fidelity, erster drahtloser Schnittstellentyp
- BT: Bluetooth, zweiter drahtloser Schnittstellentyp
- NFC: Near Field Communication, dritter drahtloser Schnittstellentyp

## Patentansprüche

1. Ein durch eine Einsatzkraft tragbarer Westenadapter (10) zum Verbinden einer Mehrzahl von Modulen (21-24, 100-400), **dadurch gekennzeichnet, dass** der Westenadapter (10) mit einer Schutzweste der Einsatzkraft lösbar koppelbar ist und zumindest einen ersten Teilbereich (T1) zum Tragen im Bereich der Brust der Einsatzkraft und einen zweiten Teilbereich (T2) zum Tragen im Bereich des Rückens der Einsatzkraft aufweist, wobei der Westenadapter (10) durch eine erste Materiallage (11), eine zweite Materiallage (12) und eine zwischen der ersten (11) und der zweiten Materiallage (12) angeordnete Infrastruktur (13) zum Koppeln der Module (21-24, 100-400) ausgebildet ist, wobei die Infrastruktur (13) eine Mehrzahl N1 von über Kabel (14) verbundene Einheiten (31-38) eines drahtgebundenen Schnittstellentyps (USB) und eine Mehrzahl N2 von über Kabel (14) verbundene Einheiten (41-42) eines ersten drahtlosen Schnittstellentyps (WiFi) aufweist.

2. Westenadapter nach Anspruch 1,
**dadurch gekennzeichnet,**
**dass** die Infrastruktur (13) eine Mehrzahl N3 von über Kabel (14) verbundene Einheiten (51-52) eines zweiten drahtlosen Schnittstellentyps (BT) und eine Mehrzahl N4 von über Kabel (14) verbundenen Einheiten (61-63) eines dritten drahtlosen Schnittstellentyps (NFC) aufweist.

3. Westenadapter nach Anspruch 1 oder 2,
**dadurch gekennzeichnet,**
**dass** die jeweilige Einheit (31-38) des drahtgebundenen Schnittstellentyps (USB) als elektrische und mechanische Verbindungs-Einheit, insbesondere als Verbindungsstecker, ausgebildet sind.

4. Westenadapter nach einem der Ansprüche 1 bis 3,
**dadurch gekennzeichnet,**
**dass** die jeweilige Einheit (41-42, 51-52, 61-63) der drahtlosen Schnittstellentypen (WiFi, BT, NFC) als eine Antenne oder als eine elektrische und mechanische Verbindungs-Einheit, insbesondere als ein Verbindungsstecker, ausgebildet ist.

5. Westenadapter nach einem der Ansprüche 1 bis 4,
**dadurch gekennzeichnet,**
**dass** jeweils zwei Einheiten (31, 35) vom gleichen Schnittstellentyp (USB) mittels einer durch eines der Kabel (14) gebildeten Punkt-zu-Punkt-Verbindung verbunden sind, wobei jeweils eine der beiden Einheiten (35), welche als Verbindungs-Einheit ausgebildet ist, in einer Verbindungsanordnung (70) der Infrastruktur (13) angeordnet ist.

6. Westenadapter nach Anspruch 5,
**dadurch gekennzeichnet,**
**dass** die Verbindungsanordnung (70) der Infrastruktur (13) mit einer korrespondierenden Verbindungsanordnung (101) eines Interface-Moduls (100) verbindbar ist, wobei das Interface-Modul (100) eine jeweilige Steuer-Einheit für einen jeden der Schnittstellentypen der Infrastruktur (13) und zumindest eine elektrische und mechanische Verbindungs-Einheit (111-114), insbesondere einen Verbindungsstecker und/oder eine Antenne, innerhalb ihrer Verbindungsanordnung (10) aufweist.

7. Westenadapter nach einem der Ansprüche 1 bis 6,
**dadurch gekennzeichnet,**
**dass** der drahtgebundene Schnittstellentyp (USB) als USB ausgebildet ist und dessen Einheiten (31-38) der Infrastruktur (13) als USB-Verbindungs-Einheiten ausgebildet sind, wobei zumindest eine der USB-Verbindungs-Einheiten (31-38) mit einem USB-Modul (200) verbindbar ist, welches einen USB-Hub (201) aufweisend einen USB-Controller (202) und eine Mehrzahl von USB-Verbindungs-Einheiten (203-206) zur Ausbildung eines kaskadierten Stern-Netzwerks mit den USB-Verbindungs-Einheiten (31-38) der Infrastruktur (13) des Westenadapters (10) umfasst.

8. Westenadapter nach einem der Ansprüche 1 bis 7,
**dadurch gekennzeichnet,**
**dass** die jeweilige Materiallage (11, 12) aus einem Gewebe, insbesondere einem Textil, aus einem Kunststoffmaterial, einem Faserverbundwerkstoff oder einem Metallwerkstoff gebildet ist und für eine Anzahl der Verbindungs-Einheiten (31, 33) eine jeweilige Durchführung (15, 16) zum Anschluss eines der Module (21, 24) aufweist.

9. Westenadapter nach Anspruch 8,
**dadurch gekennzeichnet,**
**dass** die Materiallage (11, 12) im Bereich der jeweiligen Durchführung (15, 16) eine Aufnahme-Einrichtung, insbesondere eine Tasche, zum Aufnehmen des anschließbaren Moduls (21-24) aufweist.

10. Westenadapter nach einem der Ansprüche 1 bis 9,
**dadurch gekennzeichnet,**
**dass** die Infrastruktur (13) des Westenadapters (10) dazu eingerichtet ist, eine in einem Kleidungsstück (23) der Einsatzkraft getragene kontaktlose Smartcard (SC) mit einem elektronischen System (24) zur Übertragung von kryptografischem Material und/oder von mittels des kryptografischen Materials bereitgestellten Daten kommunikationstechnisch zu koppeln.

11. System, aufweisend:
einen Westenadapter (10) nach einem der Ansprüche 1 bis 10, und
eine Anzahl von mit der Infrastruktur (13) des Westenadapters (10) verbundenen Modulen (21, 24).

12. System nach Anspruch 11,
**dadurch gekennzeichnet,**
**dass** die Anzahl von verbundenen Modulen (21-24, 100-400) ein Interface-Modul (100) umfasst, welches eine jeweilige Steuer-Einheit (102-106) für einen jeden der Schnittstellentypen der Infrastruktur (13) des Westenadapters (10) und zumindest eine elektrische und mechanische Verbindungs-Einheit, insbesondere einen Verbindungsstecker, und/oder eine Antenne , aufweist.

13. System nach Anspruch 11 oder 12,
**dadurch gekennzeichnet,**
**dass** der drahtgebundene Schnittstellentyp als USB ausgebildet ist und dessen Einheiten (31-38) der Infrastruktur (13) des Westenadapters (10) als USB-Verbindungs-Einheiten ausgebildet sind,
wobei die Anzahl von verbundenen Modulen (21-24, 100-400) ein USB-Modul (200) aufweist, welches einen USB-Hub (201) aufweisend einen USB-Controller (202) und eine Mehrzahl von USB-Verbindungs-Einheiten (203-206) zur Ausbildung eines kaskadierten Stern-Netzwerks mit den USB-Verbindungs-Einheiten (31-38) der Infrastruktur (13) des Westenadapters (10) umfasst.

14. Eine durch eine Einsatzkraft tragbare Anordnung mit einer Schutzweste für die Einsatzkraft und einem Westenadapter (10) nach einem der Ansprüche 1 bis 10, wobei der Westenadapter (10) und die Schutzweste lösbar koppelbar sind, oder einem System (1) nach einem der Ansprüche 11 bis 13, wobei das System (1) und die Schutzweste lösbar koppelbar sind.

## Claims

1. A vest adapter (10) wearable by an emergency personnel for connecting a plurality of modules (21-24, 100-400), **characterized in that**
the vest adapter (10) is detachably couplable to a protective vest of the emergency personnel and comprises at least one first sub-region (T1) for wearing in the region of the chest of an emergency personnel and a second sub-region (T2) for wearing in the region of the back of the emergency personnel, wherein the vest adapter (10) is formed by a first material layer (11), a second material layer (12), and an infrastructure (13) arranged between the first (11) and the second material layer (12) for coupling the modules (21-24, 100-400), wherein the infrastructure (13) comprises a plurality N1 of units (31-38) of a wired interface type (USB) that are connected via cables (14), and a plurality N2 of units (41-42) of a first wireless interface type (WiFi) that are connected via cables (14).

2. The vest adapter according to claim 1,
**characterized in that**
the infrastructure (13) includes a plurality N3 of units (51-52) of a second wireless interface type (BT) which are connected via cables (14), and a plurality N4 of units (61-63) of a third wireless interface type (NFC) which are connected via cables (14).

3. The vest adapter according to claim 1 or 2,
**characterized in that**
the respective unit (31-38) of the wired interface type (USB) is configured as an electrical and mechanical connection unit, in particular as a connector plug.

4. The vest adapter according to one of claims 1 to 3,
**characterized in that**
the respective unit (41-42, 51-52, 61-63) of the wireless interface types (WiFi, BT, NFC) is configured as an antenna or as an electrical and mechanical connection unit, in particular as a connector plug.

5. The vest adapter according to one of claims 1 to 4,
**characterized in that**
in each case two units (31, 35) of the same interface type (USB) are connected by means of a point-to-point connection formed by one of the cables (14), wherein in each case one of the two units (35), which is configured as a connection unit, is arranged in a connection arrangement (70) of the infrastructure (13).

6. The vest adapter according to claim 5,
**characterized in that**
the connection arrangement (70) of the infrastructure (13) is couplable to a corresponding connection arrangement (101) of an interface module (100), wherein the interface module (100) comprises a respective control unit for each of the interface types of the infrastructure (13) and at least one electrical and mechanical connection unit (111-114), in particular a connection plug and/or an antenna, within the connection arrangement (10) thereof.

7. The vest adapter according to one of claims 1 to 6,
**characterized in that**
the wired interface type (USB) is configured as USB, and the units (31-38) thereof of the infrastructure (13) are configured as USB connection units, wherein at least one of the USB connection units (31-38) is connectable to a USB module (200) which comprises a USB hub (201) comprising a USB controller (202) and a plurality of USB connection units (203-206) for forming a cascaded star network with the USB connection units (31-38) of the infrastructure (13) of the vest adapter (10).

8. The vest adapter according to one of claims 1 to 7,
**characterized in that**
the respective material layer (11, 12) is formed from a fabric, in particular a textile, from a plastic material, a fiber composite material or a metal material, and includes, for a number of the connection units (31, 33), a respective feedthrough (15, 16) for connecting one of the modules (21, 24).

9. The vest adapter according to claim 8,
**characterized in that**
the material layer (11, 12) comprises, in the region of the respective feedthrough (15, 16), a receiving device, in particular a pocket, for receiving the connectable module (21-24).

10. The vest adapter according to one of claims 1 to 9,
**characterized in that**
the infrastructure (13) of the vest adapter (10) is configured to couple, in terms of communication technology, a contactless smartcard (SC) worn in a garment (23) of the emergency personnel to an electronic system (24) for transmitting cryptographic material and/or data provided by means of the cryptographic material.

11. A system, comprising:
a vest adapter (10) according to one of claims 1 to 10, and
a number of modules (21, 24) connected to the infrastructure (13) of the vest adapter (10).

12. The system according to claim 11,
**characterized in that**
the number of connected modules (21-24, 100-400) comprises an interface module (100) which comprises a respective control unit (102-106) for each of the interface types of the infrastructure (13) of the vest adapter (10), and at least one electrical and mechanical connection unit, in particular a connection plug, and/or an antenna.

13. The system according to claim 11 or 12,
**characterized in that**
the wired interface type is configured as USB, and the units (31-38) thereof of the infrastructure (13) of the vest adapter (10) are configured as USB connection units,
wherein the number of connected modules (21-24, 100-400) comprises a USB module (200) which comprises a USB hub (201) comprising a USB controller (202) and a plurality of USB connection units (203-206) for forming a cascaded star network with the USB connection units (31-38) of the infrastructure (13) of the vest adapter (10).

14. An arrangement wearable by an emergency personnel comprising a protective vest for the emergency personnel and a vest adapter (10) according to one of claims 1 to 10, wherein the vest adapter (10) and the protective vest are detachably couplable, or comprising a system (1) according to one of claims 11 to 13, wherein the system (1) and the protective vest are detachably couplable.

## Revendications

1. Un adaptateur de gilet (10) portable par un personnel d'urgence pour connecter plusieurs modules (21-24, 100-400), **caractérisé en ce que** l'adaptateur de gilet (10) peut être couplé de manière amovible à un gilet de protection du personnel d'urgence et comprend au moins une première sous-région (T1) à porter dans la région de la poitrine du personnel d'urgence et une deuxième sous-région (T2) à porter dans la région du dos du personnel d'urgence, où l'adaptateur de gilet (10) est constitué d'une première couche de matériau (11), d'une deuxième couche de matériau (12) et d'une infrastructure (13) disposée entre la première (11) et la deuxième couche de matériau (12) pour coupler les modules (21-24, 100-400), dans lequel l'infrastructure (13) comprend une pluralité N1 d'unités (31-38) d'un type d'interface filaire (USB) connectées par des câbles (14), et une pluralité N2 d'unités (41-42) d'un premier type d'interface sans fil (WiFi) connectées par des câbles (14).

2. L'adaptateur de gilet selon la revendication 1,
**caractérisé en ce que**
l'infrastructure (13) comprend une pluralité N3 d'unités (51-52) d'un deuxième type d'interface sans fil (BT) qui sont connectées par des câbles (14), et une pluralité N4 d'unités (61-63) d'un troisième type d'interface sans fil (NFC) qui sont connectées par des câbles (14).

3. L'adaptateur de gilet selon la revendication 1 ou 2,
**caractérisé en ce que**
l'unité respective (31-38) du type d'interface filaire (USB) est configurée comme une unité de connexion électrique et mécanique, en particulier comme une fiche de connexion.

4. L'adaptateur de gilet selon l'une des revendications 1 à 3,
**caractérisé par le fait que**
l'unité respective (41-42, 51-52, 61-63) des types d'interface sans fil (WiFi, BT, NFC) est configurée comme une antenne ou comme une unité de connexion électrique et mécanique, en particulier comme une fiche de connexion.

5. L'adaptateur de gilet selon l'une des revendications 1 à 4,
**caractérisé par le fait que**
dans chaque cas deux unités (31, 35) du même type d'interface (USB) sont connectées au moyen d'une connexion point à point formée par l'un des câbles (14), dans lequel dans chaque cas l'une des deux unités (35), qui est configurée comme une unité de connexion, est disposée dans un arrangement de connexion (70) de l'infrastructure (13).

6. L'adaptateur de gilet selon la revendication 5,
**caractérisé en ce que**
l'arrangement de connexion (70) de l'infrastructure (13) peut être couplé à un dispositif de connexion correspondant (101) d'un module d'interface (100), dans lequel le module d'interface (100) comprend une unité de commande respective pour chacun des types d'interface de l'infrastructure (13) et au moins une unité de connexion électrique et mécanique (111-114), en particulier une fiche de connexion et/ou une antenne, à l'intérieur du dispositif de connexion (10) de celuici.

7. L'adaptateur de gilet selon l'une des revendications 1 à 6,
**caractérisé en ce que**
le type d'interface filaire (USB) est configuré comme USB, et les unités (31-38) de l'infrastructure (13) sont configurées comme des unités de connexion USB, dans lequel au moins une des unités de connexion USB (31-38) peut être connectée à un module USB (200) qui comprend un concentrateur USB (201) comprenant un contrôleur USB (202) et une pluralité d'unités de connexion USB (203-206) pour former un réseau en étoile en cascade avec les unités de connexion USB (31-38) de l'infrastructure (13) de l'adaptateur de gilet (10).

8. L'adaptateur de gilet selon l'une des revendications 1 à 7,
**caractérisé par le fait que**
la couche de matériau respective (11, 12) est formée d'un tissu, en particulier d'un textile, d'un matériau plastique, d'un matériau composite à base de fibres ou d'un matériau métallique, et comprend, pour un certain nombre d'unités de connexion (31, 33), une traversée respective (15, 16) pour la connexion de l'un des modules (21, 24).

9. L'adaptateur de gilet selon la revendication 8,
**caractérisé en ce que**
la couche de matériau (11, 12) comprend, dans la région de la traversée respective (15, 16), un dispositif de réception, en particulier une poche, pour recevoir le module (21-24) connectable.

10. L'adaptateur de gilet selon l'une des revendications 1 à 9,
**caractérisé par le fait que**
l'infrastructure (13) de l'adaptateur de gilet (10) est configurée pour coupler, en termes de technologie de communication, une carte à puce sans contact (SC) portée dans un vêtement (23) du personnel d'urgence à un système électronique (24) pour transmettre du matériel cryptographique et/ou des données fournies au moyen du matériel cryptographique.

11. Un système comprenant :
un adaptateur de gilet (10) selon l'une des revendications 1 à 10, et
un certain nombre de modules (21, 24) connectés à l'infrastructure (13) de l'adaptateur de gilet (10).

12. Le système selon la revendication 11,
**caractérisé en ce que**
le nombre de modules (21-24, 100-400) connectés comprend un module d'interface (100) qui comprend une unité de commande respective (102-106) pour chacun des types d'interface de l'infrastructure (13) de l'adaptateur de gilet (10), et au moins une unité de connexion électrique et mécanique, en particulier une fiche de connexion, et/ou une antenne.

13. Le système selon la revendication 11 ou 12,
**caractérisé en ce que**
le type d'interface câblée est configuré comme USB, et les unités (31-38) de l'infrastructure (13) de l'adaptateur de gilet (10) sont configurées comme des unités de connexion USB,
dans lequel le nombre de modules (21-24, 100-400) connectés comprend un module USB (200) qui comprend un concentrateur USB (201) comprenant un contrôleur USB (202) et une pluralité d'unités de connexion USB (203-206) pour former un réseau en étoile en cascade avec les unités de connexion USB (31-38) de l'infrastructure (13) de l'adaptateur de gilet (10).

14. Un dispositif pouvant être porté par un personnel d'urgence comprenant un gilet de protection pour le personnel d'urgence et un adaptateur de gilet (10) selon l'une des revendications 1 à 10, dans lequel l'adaptateur de gilet (10) et le gilet de protection peuvent être couplé de manière amovible, ou comprenant un système (1) selon l'une des revendications 11 à 13, dans lequel le système (1) et le gilet de protection peuvent être couplé de manière amovible.
